# EUROPEAN PATENT SPECIFICATION

(11) **EP 1 523 510 B1**
(45) Date of publication and mention of the grant of the patent: **17.10.2007**
(21) Application number: 03764956.3
(22) Date of filing: 08.07.2003
(51) Int. Cl.: C08F 220/12, C08F 293/00, C08F 2/38

(54) **METHOD FOR POLYMERIZING ETHYLENICALLY UNSATURATED MONOMERS BY DEGENERATIVE IODINE TRANSFER**
VERFAHREN ZUR POLYMERISATION ETHYLENISCH UNGESÄTTIGTER MONOMERE
PROCEDE DE POLYMERISATION DE MONOMERES ETHYLENIQUES INSATURES

(30) Priority: 23.07.2002 EP 02078523
(43) Date of publication of application: 20.04.2005
(73) Proprietor: Nuplex Resins B.V., 4612 RB Bergen op Zoom (NL)
(72) Inventor: MESTACH, Dirk, Emiel, Paula, B-2560 Nijlen (BE); BRINKHUIS, Richard, Hendrikus, Gerrit, NL-8011 JX Zwolle (NL); ELFRINK, Petrus, Johannes, Maria, David, NL-5831 PZ Boxmeer (NL)
(74) Representative: Derks, Wilbert
(86) International application number: PCT/EP2003/007395
(87) International publication number: WO 2004/009648

(56) References cited:
- EP-A- 0 489 370
- EP-A- 0 947 527
- US-A- 4 158 678
- US-A- 5 371 151
- LANSALOT, M. ET AL: "Controlled Free-Radical Miniemulsion Polymerization of Styrene using Degenerative Transfer" MACROMOLECULES, vol. 32, 1999, pages 7354-7360, XP002222864 cited in the application
- GAYNOR, S. ET AL: "Controlled Radical Polymerisation by Degenerative Transfer" MACROMOLECULES, vol. 28, 1995, pages 8051-8056, XP002222865 cited in the application

## Description

The invention pertains to a method to prepare a block or gradient co-polymer comprising a step of radically polymerizing a mixture of ethylenically unsaturated monomers.

Controlled radical polymerization processes have received much attention over the past decade, because of the possibility to prepare new valuable polymeric materials based on standard conventional monomeric building blocks, such as block or gradient copolymers, and narrow-polydispersity functional polymers, with narrower functionality distributions, that can be used in film-forming or cross-linking compositions, such as coating compositions, adhesives and printing ink formulations.

In the field of "living" radical polymerizations (polymerizations under radical conditions where termination processes of growing radicals are reversible, so that all initiated chains can, in principle, continue to grow as long as monomers and radicals are present), three technologies have been studied in depth:
- *nitroxide mediated polymerizations* (NMP), which are based on homolytic scission of the covalent bond formed between a polymer radical and a nitroxide stable radical;
- *atom transfer radical polymerization* (ATRP), in which a halogen (usually Cl or Br) atom is reversibly transferred between a Cu(I/II) complex and a polymer radical, in a process that encompasses a redox cycle;
- *reversible addition fragmentation chain transfer* (RAFT), which is a process wherein dithioester end groups can be rapidly and reversibly transferred between polymeric radicals.

For all these systems, the living character was proven by a typically linear development of molecular weight with conversion, low polydispersities obtained in polymerizations, and the preparation of block copolymers by sequential addition of different monomers.

Especially ATRP and RAFT have possibilities for numerous applications with respect to the types of monomers used. In ATRP, however, acidic conditions and acidic monomers create problems, while the necessary removal of the Cu-amine complexes from the polymers is an expensive and thus unwanted step. In RAFT, these limitations do not occur, but this method suffers in that the polymer chains formed contain dithioester end groups, which are strong chromophores. The chromophores can be destroyed by reaction with a nucleophile, but this nucleophile is not always compatible with the functional groups that may be present in the chains. Such chromophore destruction comes at the expense of an extra reaction step and leads to low-molecular weight products in the polymer, which may be difficult to remove. Moreover, the dithioester mediating compounds are expensive.

In general, RAFT based on dithio-ester compounds is assumed to be favourable in the rate of end group transfer (more transfer events, lower polydispersity, better control). A lower polydispersibility is desirable when the polymer is used in e.g. film-forming or cross-linking compositions. A narrow molecular weight distribution in such applications leads to a good balance of pot life and curing speed, viscosity and network properties. Further, in the art it is assumed that the RAFT process is applicable to a broad range of monomers.

NMP has the disadvantage that expensive nitroxides are needed if the process is to be used at acceptably low temperatures for acrylates, whereas methacrylates have intrinsic problems due to the fact that disproportionation may occur as a side reaction.

Another type of living radical polymerization process is *degenerative iodine transfer* (DIT) (see for instance Journal of Physical Organic Chemistry, Vol. 8, 306-315 (1995) and Macromolecules, 28, 8051-8056 (1995)). In this process, as in the RAFT process, an iodine end group can transfer from one polymer to a radical end group of another polymer present in the polymerization system, the iodine atom playing a similar role to that of the dithioester group in RAFT, the terminal iodine and the radical function exchanging between two polymer chains. A chain transfer agent with an iodine atom is used as entry in the DIT process. Conventional iodine chain transfer agents include alkyl or perfluoroalkyl iodides.

In Macromolecules, 28, 8051-8056 (1995), Macromolecules, 33(9), 3485 (2000), Macromolecules, 32(22), 7354 (1999), Macromolecules, 31 (9), 2809 (1998) the DIT process was described for application with styrene monomers, for which it appears to work moderately well (polydispersities typically 1.5), and for application with halogenated vinyl monomers like vinyl chloride and fluorinated vinyl species.

DIT was attempted for acrylates, but the results showed less control (broader polydispersities >2, indicating a low rate of transfer between acrylate chains) (see: Macromolecules, 28, 8051-8056 (1995)). DIT processes with acrylates have been disclosed in a few documents: however, these aim at obtaining iodine-functional chains instead of aiming at actual living polymerizations (see for instance US 6,143,848). DIT processes to prepare block copolymers of acrylates and styrene have been reported in EP 947527, Macromolecules, 28, 2093 (1995), and Macromol. Rapid Commun., 2000, 21(13), 921.

A few attempts to obtain a degenerative iodine transfer process with methacrylates have been reported, but all of these suggest that methacrylate monomers cannot be used in an acceptable manner in conventional DIT processes using the conventional iodine-functional CTAs, which are applied in the DIT process for e.g. styrene (see for instance Macromolecules, 28, 8051 (1995)). High-molecular weight material is formed at the start of the polymerization, leading to high polydispersities, without the typical linear development of molecular weight with conversion, which is characteristic for a polymerization with a living character, being observed. Another comparison of DIT processes with styrene, acrylate, and methacrylate monomers was disclosed in B. Klumperman at the UNESCO School & South African IUPAC conference on Macromolecular and Materials Science, 29-31 March 1999 and 10-12 April 2000, which is to be found at
http : //www. sun. ac. za/unesco/PolymerED2000/Conf1999/Lectures1999/Klump2. pdf and www. sun. ac.za/unesco/PolymerED2000/Conf2000/KlumpermanC. pdf.

Here it is also concluded that DIT is not a suitable process for the polymerization of a mixture of monomers containing a large amount of methacrylate monomers. Therefore, it has been assumed that DIT is not suitable for polymerizing methacrylates in a controlled manner, to obtain the benefits that can be obtained in a "controlled (living) radical polymerization" process in the art. In US 5,439, 980 this is confirmed in Comparative example 2, where it was found that when MMA alone is used with a fluorinated alkyliodide, only a homopolymer of MMA is produced and a block polymer with an iodide- functional perfluoropolyether is not produced.

EP0489370 discloses a polymer comprising at least one polymer chain, which is produced by polymerizing, in the presence of a radical generating source and an iodide compound, at least one monomer M₁ having a radically polymerizable unsaturated bond between a carbon atom and an iodine atom constituting a carbon-iodine bond of the iodide compound to form at least one polymer chain between the carbon atom and the iodine atom, wherein the polymerization reaction is carried out in the presence of a monomer M₂ which is different from the monomer M₁ and has a larger addition reactivity with a carbon radical which is generated by cleavage of the carbon-iodine bond of the iodine compound than that of the monomer M₁. EP0489370 does not disclose an iodine atom containing intermediate polymer comprising at least 50 mole% of methacrylate monomers.

Since methacrylates are a very important class of monomers for many applications, with high- and low-polarity candidates and various functional side groups available, with high-Tg backbones with good chemical durability being formed, the inability to use methacrylates is a serious problem in DIT technology, and a need exists for an effective DIT method allowing the production of polymers based on methacrylates with structures that benefit from the advantages of the living nature of the polymerization process.

It is an object of the present invention to obtain a DIT process that can be used for (co)polymerizing methacrylate monomers as in a living radical polymerization process. According to the present invention, it was found that the DIT process can be performed in a very favourable way using methacrylates, if the proper start-up process is chosen. We have found that the DIT process can be adapted for the polymerization of compositions of predominantly methacrylate monomers, to find a high transfer rate of iodine atoms between methacrylate chain ends, leading to better control than a DIT process using styrenic or acrylate monomers, to low polydispersities closely resembling those of ATRP or RAFT processes, molecular weights increasing with conversion, and the opportunity to prepare well defined block and gradient copolymers.

We have found a novel method wherein iodine-functional methacrylate polymers are obtained, leading to a DIT process proceeding with a high level of control.

More specifically, the invention pertains to a method for making a block or gradient final co-polymer comprising a step of radically polymerizing a mixture of ethylenically unsaturated monomers in the presence of a) a radical precursor and b) an iodine atom-containing intermediate polymer or a mixture of iodine atom-containing intermediate polymers, wherein the iodine atom-containing intermediate polymer comprises at least 50 mole% of methacrylate monomers and is obtainable from a polymerization of ethylenically unsaturated monomers.

For clarity purposes the terms "intermediate polymer" and "final polymer" are introduced in this description. However, it has to be understood that the final polymer can be reacted further and that the polymerization steps leading to the intermediate and the final polymer need not follow each other directly, but that there may be (a) further processing or reaction step(s) between the intermediate and final polymer(ization).

The iodine atom-containing intermediate polymers to be formed initially (forming the "first block" if a block polymer is to be made) should predominantly comprise monomers of the methacrylate type, i.e. the polymer comprises at least 50 mole% of methacrylate monomers (in this application methacrylate monomers include methacrylic acid or esters, amides or anhydrides thereof, or methacrylonitrile). This results in the end group of the intermediate polymer being predominantly of the iodine-containing methacrylate type.

Such iodine-containing methacrylate end group has the formula: 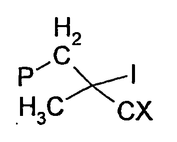 wherein P stands for polymer and CX is an acid, anhydride, ester, amide; or nitrile group.

More preferred is a composition wherein the intermediate polymer comprises more than 70 mole% of methacrylate monomers; most preferred is a composition wherein the intermediate polymer comprises more than 90 mole% of methacrylate monomers. Preferably, the molecular weight of this intermediate polymer is less than 20,000 and more than 500, more preferably less than 10,000, most preferably less than 5,000 and more than 1,000. In this respect the use of the term intermediate oligomer instead of intermediate polymer should be taken into consideration as well. The iodine atom-containing intermediate polymer may additionally comprise other (co)monomers which may be of the (meth)acrylate, styrene, vinyl ester, and maleate type.

The polymerization step leading to the final polymer can be performed with the iodine atom-containing intermediate polymer and a monomer or a mixture of monomers, the composition of which may be different from the composition of the iodine atom-containing intermediate polymer, in the presence of a radical precursor.

Suitable mixtures for making the final and intermediate polymers comprise monomers selected from, e.g. acrylic acid, methacrylic acid, methyl acrylate, ethyl acrylate, butyl acrylate, methyl methacrylate, ethyl methacrylate, butyl methacrylate, glycidyl methacrylate, glycidyl acrylate, 2-hydroxyethyl acrylate, 2-ethylhexyl acrylate, potassium methacrylate, cyclohexyl methacrylate, 2-(dimethylamino)ethyl methacrylate, stearyl methacrylate, 2-hydroxyethyl methacrylate, 2-hydroxypropyl methacrylate, vinyl methacrylate, benzyl methacrylate, lauryl methacrylate, diacetone acrylamide, acrylamide, acrolein, methacrylamide, methacrolein, acrylonitrile, methacrylonitrile, styrene, alphamethyl styrene, vinyl toluene, isopropenyl-isopropylidene isocyanato-benzene (mTMI from Cytec), chlorostyrene, butadiene, isoprene, chloroprene, maleic acid, maleimide, methyl maleate, ethyl maleate, propyl maleate, butyl maleate, calcium maleate, allyl maleate, 2-ethylhexyl maleate, octyl maleate, maleic hydrazide, maleic anhydride, fumaric acid, methyl fumarate, ethyl fumarate, propyl fumarate, butyl fumarate, sodium fumarate, fumaronitrile, fumaryl chloride, vinyl acetate, tert-decanoic acid ethenyl ester (VeoVa^{®} 10, ex Resolution Performance Products), neononanoic acid ethenyl ester (VeoVa^{®} 9, ex Resolution Performance Products), vinyl pivalate, and the like. It is not necessary that methacrylate monomers are predominantly present in the mixture for the final polymer, and this mixture may even be free of methacrylic monomers. If the monomers selected for this final polymerization step are predominantly of the methacrylate type, the process can then be repeated to form a third or further block, or gradient copolymers can be obtained, as is obvious to the skilled person.
The weight ratio of the iodine atom-containing intermediate polymer to the monomers being polymerized to form the final polymer may vary from 1:100 to 100:1.

Optionally, the amounts are selected so that the mole ratio iodine atom-containing intermediate polymer b) : radical precursor a) is >0.1n, more preferably >0.5n, wherein n stands for the number of radicals effectively generated per molecule of radical precursor (i.e. taking into account the initiator efficiency).

The final polymerization process can take place in batch mode or semi-batch mode, with feeding of several of the reactants to the vessel, or in a process comprising a continuous step. The iodine-functional methacrylate intermediate polymers of the DIT type can be transferred and used as a CTA in the final polymerization process according to the invention.

The final polymerization can be carried out in bulk, in an organic solvent or in an aqueous medium, in a suspension polymerization process, an emulsion polymerization process, a dispersion polymerization process, or a mini-emulsion polymerization process.

The iodine atom-containing intermediate polymer is made from the monomer mixtures as mentioned above for the final polymer, provided that the amount of methacrylic monomers is so selected that at least 50 mole% of the monomers are of the methacrylate type. The polymerization leading to the intermediate polymer is performed in the presence of I₂ or an effective iodine chain transfer agent (CTA) d) and a radical precursor c). The term iodine as used in this application includes I₂ and I₂-precursors (i.e. compounds that can form I₂ *in situ),* such as N-iodosuccinimide, ICI, IBr, and l₃⁻. Iodine chain transfer agents and iodine are used in combination with a small amount of radical precursor to obtain a methacrylate intermediate polymerization process.

When molecular iodine is used, the iodine radical released after one iodine is abstracted by a polymer radical does not reinitiate a methacrylate polymerization, but recombines with another polymer radical. The net effect of molecular iodine is the functionalization of two polymer chains with an iodine end group, in an identical way (J. Polym. Sci. Polym. Lett. Ed., Vol. 14, 499-502 (1976)). In terms of the intermediate polymerization process, it implies that slightly more than 1 equivalent of initiating radicals should be generated, compared to the iodine atoms present in the systems as molecular iodine. The mole ratio I₂ : radical precursor d) preferably is between 0.05n and 0.5n, more preferably between 0.1 n and 0.5n, and most preferably between 0.25n and 0.5n, wherein n has the previously given meaning. This route to obtaining the low-molecular weight intermediate I-terminated polymers is very effective, and is a preferred embodiment.

An example of an effective iodine CTA (rapidly allowing transfer of the iodine to methacrylate polymer radicals) is a sulfonyl iodide, e.g. p-toluene sulfonyl iodide. When such an iodine CTA is used, preferably the mole ratio of iodine CTA : radical precursor d) is >0.1n, more preferably >0.5n, wherein n stands for the number of radicals effectively generated per molecule of radical precursor.

The most preferred process according to the present invention is the one wherein iodine is used.

It was found to be advantageous sometimes to perform the polymerization step(s) of the method according to this invention in the presence of an epoxide-containing compound, especially the DIT polymerization to form the intermediate polymer. In the presence of epoxide-containing compounds the polydispersity obtained is narrower, leading to coating compositions with a good balance of pot life and curing speed, viscosity and network properties. Similarly, such epoxide-containing compound can also be used in the synthesis of the final polymer. Such compounds are preferably selected from glycidyl ethers, glycidyl esters, and cycloaliphatic epoxides. Suitably glycidyl-containing monomers are used in the preparation of the iodine atom-containing polymer, such as glycidyl methacrylate, glycidyl acrylate and the glycidyl ester of neodecanoic acid (Cardura^{®} E10). The method according to the invention is preferably performed such that the mole ratio epoxide : iodine atom-containing polymer b) is > 0.01, preferably >0.05.

Although the essence of the present invention is the radical polymerization of a mixture of ethylenically unsaturated monomers in the presence of a) a radical precursor and b) an iodine atom-containing polymer or a mixture of iodine atom-containing polymers, the invention also pertains to the two-step procedure for making a block or gradient co-polymer comprising a step of radically polymerizing a mixture of ethylenically unsaturated monomers to give iodine atom-containing polymers b) comprising at least 50 mole% of methacrylate monomers in the presence of c) a radical precursor and d) I₂ or a iodine chain transfer agent, followed by a step of radically polymerizing a mixture of ethylenically unsaturated monomers in the presence of a) a radical precursor and b) the iodine atom-containing polymer of the first step. The second step may be started before the first step is fully ended.

Also in this two-step procedure the mole ratio sulfonyl iodide : radical precursor is >0.1 n, wherein n stands for the number of radicals effectively generated per molecule of radical precursor, or wherein the mole ratio I₂ : radical precursor is between 0.05n and 0.5n.

The polymerization process(es), i.e. the process leading to the intermediate polymer and/or the process leading to the final polymer, of the monomers take(s) places at temperatures of less than 130°C, preferably less than 110°C, even more preferably less than 90°C, most preferably less than 70°C. It is preferred that a precursor of mild initiating radicals is used as a radical precursor. Mild initiating radicals are for example C-centered radicals, preferably C-centered radicals obtained from the decomposition of azo radical initiators. Initiators of the azo-type include azobisisobutyronitrile (AIBN) or azobisvaleronitrile.

As indicated above, the final polymer may be reacted further. It may be advantageous to modify the iodine end groups-containing polymers formed in the process according to the invention in a process after or during the polymerization. The end groups can be modified, e.g., by elimination, cyclization, atom transfer, redox, or substitution reaction, optionally under removal of iodine and/or low-molecular weight iodine-containing compounds. More specifically, the removal of the iodine atom may be done by any mechanism known to the skilled person such as a nucleophilic reaction, by heating of the polymer (leading to homolytic scission but also to elimination products), or by reaction with a radical generating compound. It may be favourable to perform such thermal or radical reactions in the presence of reducing conditions to scavenge iodine radicals or I₂ formed.

The nucleophilic reaction can suitably be performed using mercaptopropionic acid in combination with a base. The radical-generating compound may be a peroxide, for example H₂O₂. A radical reaction under reducing conditions can be performed by heating the iodine-functional polymers in the presence of sodium formaldehyde sulfoxylate.

The final polymer prepared by the method according to this invention can be used in film-forming or cross-linking compositions such as coating compositions, adhesives, and (printing) ink formulations. Block or gradient copolymer products made by the method according to the invention can be used as rheology additives, surfactants, dispersants, adhesion promotors and/or flow improvement additives.

Prefered coating compositions include coating compositions that can be used in automotive and general industrial coating applications.

The invention is further illustrated with the following examples.

All reported molecular weights were determined by size exclusion chromatography (RI detection) and are expressed in polystyrene equivalent molecular weights, unless specified otherwise. Low-molecular weight materials (M<500), originating e.g. also from initiator in cage recombination products and optionally added low-molecular weight epoxides, were not taken into account for this determination of the main polymer envelope in the molecular mass distribution. The following abbreviations are used: MMA = methyl methacrylate, GMA = glycidyl methacrylate; BA = butyl acrylate, BMA = butyl methacrylate, HEMA = hydroxyethyl methacrylate, SEC = size exclusion chromatography, Mn = number average molecular weight, Mw = weight average molecular weight, Mz = Z-average molecular weight. The polydispersity of the polymers was determined as the ratio Mw/Mn.

The effect of copolymerizing methacrylates and acrylates on molar mass distribution, wherein the molar mass and the polydispersity are taken as a measure of the extent of control, is illustrated by the following examples. It can be seen that control is lost if the fraction of acrylate monomers becomes too high. These experiments show that upon using MMA/BA ratios with a good control gradient, copolymers are obtained due to the higher polymerization reactivity of MMA monomer vs. BA monomer, as is known in the art.

In general, all copolymerizations carried out under conditions which allow for composition drift will produce gradient copolymers under the conditions of the DIT process in this invention.

### Example 1

A reaction vessel was charged with 21.25 g of MMA, 5.32 g of BA, 20 g of butyl acetate, 1.54 g of l₂, and 2.258 g of 2,2'-azobis(2,4-dimethylvaleronitrile), degassed, and maintained under a nitrogen atmosphere. The temperature was raised to 67°C, and the reaction was continued for 8 h. After 1 h and 40 min, the brown iodine colour was observed to fade, an observation that coincided with a steep increase of conversion with time, after the inhibition period in the presence of molecular iodine. SEC analysis of a sample taken after this period (conversion 88%) yields an Mn of 2,325 and an Mw/Mn of 1.31, Mz/Mw 1.25.

### Example 2

A reaction vessel was charged with 15.96 g of MMA, 10.66 g of BA, 20 g of butyl acetate, 1.53 g of I₂, and 2.26 g of 2,2'-azobis(2,4-dimethylvaleronitrile), degassed, and maintained under a nitrogen atmosphere. The temperature was raised to 64°C, and the reaction was continued for 8 h. After 2 h the brown iodine colour was observed to fade, an observation which coincided with a steep increase of conversion with time, after the inhibitive period in the presence of molecular iodine. SEC analysis of a sample taken after this period (conversion 82%) yields an Mn of 2,210 and an Mw/Mn of 1.48, Mz/Mw 1.47.

### Comparison Example 3

A reaction vessel was charged with 10.62 g of MMA, 15.96 g of BA, 20 g of butyl, acetate, 1.53 g of I₂, and 2.267 g of 2,2'-azobis(2,4-dimethylvaleronitrile), degassed, and maintained under a nitrogen atmosphere. The temperature was raised to 64°C, and the reaction was continued for 20 h. After 2 h, the brown iodine colour was observed to fade. SEC analysis of a sample taken after this period (conversion 95%) yields an Mn of 2,430, an Mw/Mn of 2.04, and an Mz/Mw of 2.16.

### Comparison Example 4

A reaction vessel was charged with 5.31 g of MMA, 21.26 g of BA, 20 g of butyl acetate, 1.52 g of I₂, and 2.267 g of 2,2'-azobis(2,4-dimethylvaleronitrile), degassed, and maintained under a nitrogen atmosphere. The temperature was raised to 64°C, and the reaction was continued for 20 h. SEC analysis of a sample taken after this period (conversion 95%) yields an Mn of 2,580, an Mw/Mn of 2.17, and an Mz/Mw of 2.23.

### Comparison Example 5

A reaction vessel was charged with 26 g of BA, 20 g of butyl acetate, 1.67 g of I₂, and 2.267 g of 2,2'-azobis(2,4-dimethylvaleronitrile), degassed, and maintained under a nitrogen atmosphere. The temperature was raised to 64°C, and the reaction was continued for 4 h. SEC analysis of a sample taken after this period (conversion 93%) yields an Mn of 2,300, an Mw/Mn of 1.92, and an Mz/Mw of 2.07.

### Example 6

A reaction vessel was charged with 11.01 g of MMA, 11.00 g of BA, 8.06 g of HEMA, 20 g of butyl acetate, 1.523 g of I₂, and 2.26 g of 2,2'-azobis(2,4-dimethylvaleronitrile), degassed, and maintained under a nitrogen atmosphere. The temperature was raised to 64°C, and the reaction was continued for 7 h. SEC analysis of a sample taken after this period (conversion 98%) yields an Mn of 4,800, an Mw/Mn of 1.26, and an Mz/Mw of 1.31. This example shows that monomers with functional side groups may also be used.

### Example 7

To a reaction vessel maintained at 65°C a solution consisting of 36.49 g of BMA, 6.57 g of GMA, 3.69 g of I₂, and 5.42 g of 2,2'-azobis(2,4-dimethylvaleronitrile) and 16 g of Dowanol^{®} PM (glycol ether solvent ex Dow Chemical Co.) was fed over a period of 2 h, to obtain a first BMA-co-GMA block of Mn 2,880, Mw/Mn 1.25, Mz/Mw 1.19.

### Example 8

A reaction vessel was charged with 11.02 g of MMA, 11.01 g of BA, 20.06 g of butyl acetate, 1.52 g of I₂, and 2.26 g of 2,2'-azobis(2,4-dimethylvaleronitrile), degassed, and maintained under a nitrogen atmosphere. The temperature was raised to 64°C, and the reaction was monitored until the dark iodine colour started to fade (conversion 9%). At this point, 5.29 g of methacrylic acid and 2.75g of Cardura® E-10 were added in one shot and the reaction was continued for 4 h. SEC analysis of a sample taken after this period (conversion 99%) yields an Mn of 2,928, an Mw/Mn of 1.32, and an Mz/Mw of 1.28.

### Example 9

To the polymer of Example 7, a mixture of 27.9 g of HEMA and 0.469 g of 2,2'-azobis(2,4-dimethylvaleronitrile) was added, together with 10 ml of Dowanol^{®} PM, at a temperature of 64°C. After 4 h, a block copolymer was obtained with Mn 2,430, Mw/Mn 1.46, Mz/Mw 1.31.

### Example 10

A reaction vessel was charged with 30 g of MMA, 20 g of butyl acetate, 1.516 g of I₂, and 2.259 g of 2,2'-azobis(2,4-dimethylvaleronitrile), degassed, and maintained under a nitrogen atmosphere. The temperature was raised to 66°C, and the reaction was continued for 4.5 h. At this point, the conversion was 81 %, the Mw was 3,000 (Mz/Mw 1.26), and a mixture of 5.01 g of HEMA, 5.08 g of BMA, 6 g of butyl acetate, and 0.0097 g of 2,2'-azobis(2,4-dimethylvaleronitrile) was added, and the reaction was continued for another 3.5 h. The final block copolymer had an Mw of 3,580, Mz/Mw 1.33).

### Example 11

A reaction vessel was charged with 30.05 g of MMA, 20.05 g of butyl acetate, 1.52 g of I₂, 2.26 g of 2,2'-azobis(2,4-dimethylvaleronitrile), degassed, and maintained under a nitrogen atmosphere. The temperature was raised to 65°C, and the reaction was continued for 6.5 h. SEC analysis of a sample taken after this period (conversion 97%) yields an Mn of 2,881, an Mw/Mn of 1.14, Mz/Mw 1.12.
Three days later, a mixture of 60 g of BMA, 35.0 g of butyl acetate, and 0.80 g of 2,2'-azobis(2,4-dimethylvaleronitrile) was slowly added to this block over a period of 3.5 h at 65°C, and polymerized for an additional 2 h to obtain a block copolymer with Mn 7,200, Mw/Mn 1.67, Mz/Mw 1.47.

### Example 12

A reaction vessel was charged with 30.0 g of MMA, 20 g of butyl acetate, 2.54 g of I₂, 3.83 g of 2,2'-azobis(2,4-dimethylvaleronitrile), and 2.33 g of Cardura^{®} E-10 (versatic acid glycidyl ester, ex Resolution), degassed, and maintained under a nitrogen atmosphere. The temperature was raised to 64°C, and the reaction was continued for 5 h. SEC analysis of a sample taken after this period (conversion 95%) yields an Mn of 2,990, an Mw/Mn of 1.20, Mz/Mw 1.16.

### Example 13

To the polymer of Example 12 was added a mixture of 2.57 g of BMA, 2.5 g of butyl acetate, and 0.257 g of 2,2'-azobis(2,4-dimethylvaleronitrile). The reaction was continued for an additional 2 h (conversion 99%), to yield a block copolymer with Mn 3,263, Mw/Mn 1.21, Mz/Mw 1.18.

### Example 14

A reaction vessel was charged with 30.05 g of MMA, 20.03 g of butyl acetate, 2.54 g of I₂, 3.79 g of 2,2'-azobis(2,4-dimethylvaleronitrile), degassed, and maintained under a nitrogen atmosphere. The temperature was raised to 64°C, and the reaction was continued for 7 h. SEC analysis of a sample taken after this period (conversion 97%) yields an Mn of 1710, an Mw/Mn of 1.16, Mz/Mw 1.14.
To this block was added a mixture of 15.04 g of BMA, 10.06 g of butyl acetate, and 0.27 g of 2,2'-azobis(2,4-dimethylvaleronitrile) at a feeding rate of 0.187 ml/min. The polymerization of the second block was continued for a total time of 4.5 h to yield a block copolymer with Mn 2,390, Mw/Mn 1.31, Mz/Mw 1.38.

Next to the I₂ route, a good start to a DIT process with methacrylates can also be made if an iodine CTA, such as tosyl iodide, with a high chain transfer coefficient for methacrylates (CTC>1) is used.

## Claims

1. A method for making a block or gradient final (co)polymer comprising a step of radically polymerizing a mixture of ethylenically unsaturated monomers to an iodine atom-containing intermediate polymer, wherein the iodine atom-containing intermediate polymer comprises at least 50 mole% of methacrylate monomers, in the presence of c) a radical precursor and d) I₂ or a iodine chain transfer agent, followed by a step of radically polymerizing a mixture of ethylenically unsaturated monomers in the presence of a) a radical precursor and b) the iodine atom-containing intermediate polymer of the first step.

2. A method for making a block or gradient final (co)polymer comprising a step of radically polymerizing a mixture of ethylenically unsaturated monomers in the presence of a) a radical precursor and b) an iodine atom-containing intermediate polymer or a mixture of iodine atom-containing intermediate polymers, wherein the iodine atom-containing intermediate polymer comprises at least 50 mole% of methacrylate monomers and is obtainable from a polymerization of ethylenically unsaturated monomers.

3. The method according to claim 1 or 2 wherein the mole ratio iodine atom-containing intermediate polymer(s) b) : radical precursor a) is > 0.1 n, wherein n stands for the number of radicals effectively generated per molecule of radical precursor.

4. The method according to any one of preceding claims 1-3 wherein the temperature during the polymerization step(s) is lower than 130°C, preferably lower than 110°C, even more preferably lower than 90°C, and most preferably lower than 70°C.

5. The method according to any one of preceding claims 1-4 wherein the polymerization step(s) is (are) performed in the presence of an epoxide-containing compound.

6. The method according to claim 5 wherein the mole ratio epoxide : iodine atom-containing intermediate polymer b) is > 0.01, preferably >0.05.

7. A method according to any one of claims 2-6 wherein the iodine atom-containing intermediate polymer is obtainable by polymerization of a mixture of ethylenically unsaturated monomers comprising at least 50 mole% of methacrylate monomers in the presence of c) a radical precursor and d) iodine or an iodine chain transfer agent.

8. The method of claim 1 or 7 wherein the mole ratio I₂ : radical precursor c) is between 0.05n and 0.5n, wherein n stands for the number of radicals effectively generated per molecule of radical precursor.

9. The method of claim 1 or 7 wherein the mole ratio sulfonyl iodide : radical precursor c) is > 0.1 n, wherein n stands for the number of radicals effectively generated per molecule of radical precursor.

10. A method according to any one of preceding claims 1-9 wherein the iodine atom-containing intermediate polymer has a molecular weight of less than 10,000.

11. A method according to any one of preceding claims 1-10 wherein the final polymer is reacted further, with the iodine atom in the final polymer being removed, preferably by nucleophilic reaction, by heating, and/or by reaction with a radical-generating compound, optionally under reducing conditions.

12. Block or gradient (co)polymer obtainable by the method of any one of preceding claims 1-11.

13. Use of block or gradient final (co)polymer prepared according to any one of claims 1-11 in a film-forming composition, preferably a coating composition, adhesive or ink formulation, more preferably in automotive or industrial coating compositions.

14. Use of block or gradient final (co)polymer prepared according to any one of preceding claims 1-11 as rheology additive, surfactant, dispersant, adhesion promoter and/or flow improvement additive.

## Patentansprüche

1. Verfahren zur Herstellung eines Block- oder Gradienten-End(co)polymers, umfassend einen Schritt des radikalischen Polymerisierens eines Gemischs von ethylenisch ungesättigten Monomeren an ein iodatomhaltiges Zwischenpolymer, wobei das iodatomhaltige Zwischenpolymer wenigstens 50 Mol-% Methacrylat-Monomere umfasst, in Gegenwart von c) einem Radikalbildner und d) I₂ oder einem Iod-Kettenübertragungsmittel, gefolgt von einem Schritt des radikalischen Polymerisierens eines Gemischs von ethylenisch ungesättigten Monomeren in Gegenwart von a) einem Radikalbildner und b) dem iodatomhaltigen Zwischenpolymer des ersten Schritts.

2. Verfahren zur Herstellung eines Block- oder Gradienten-End(co)polymers, umfassend einen Schritt des radikalischen Polymerisierens eines Gemischs von ethylenisch ungesättigten Monomeren in Gegenwart von a) einem Radikalbildner und b) einem iodatomhaltigen Zwischenpolymer oder einem Gemisch von iodatomhaltigen Zwischenpolymeren, wobei das iodatomhaltige Zwischen polymer wenigstens 50 Mol-% Methacrylat-Monomere umfasst und durch Polymerisation von ethylenisch ungesättigten Monomeren erhältlich ist.

3. Verfahren gemäß Anspruch 1 oder 2, wobei das Stoffmengenverhältnis von iodatomhaltigem Zwischenpolymer (iodatomhaltigen Zwischenpolymeren) b) zu Radikalbildner a) > 0,1 n ist, wobei n für die Zahl der Radikale steht, die pro Molekül des Radikalbildners effektiv erzeugt werden.

4. Verfahren gemäß irgendeinem der vorstehenden Ansprüche 1-3, wobei die Temperatur während des bzw. der Polymerisationsschritte niedriger als 13D °C, vorzugsweise niedriger als 110 °C, besonders bevorzugt niedriger als 90 °C und am meisten bevorzugt niedriger als 70 °C ist.

5. Verfahren gemäß irgendeinem der vorstehenden Ansprüche 1-4, wobei der bzw. die Polymerisationsschritte in Gegenwart einer epoxidhaltigen Verbindung durchgeführt wird bzw. werden.

6. Verfahren gemäß Anspruch 5, wobei das Stoffmengenverhältnis von Epoxid zu iodatomhaltigem Zwischenpolymer b) > 0,01, vorzugsweise > 0,05, ist.

7. Verfahren gemäß irgendeinem der Ansprüche 2-6, wobei das iodatomhaltige Zwischenpolymer durch Polymerisation eines Gemischs von ethylenisch ungesättigten Monomeren, die wenigstens 50 Mol-% Methacrylat-Monomere umfassen, in Gegenwart von c) einem Radikalbildner und d) Iod oder einem Iod-Kettenübertragungsmittel erhältlich ist.

8. Verfahren gemäß Anspruch 1 oder 7, wobei das Stoffmengenverhältnis von I₂ zu Radikalbildner c) zwischen 0,05 n und 0,5 n liegt, wobei n für die Zahl der Radikale steht, die pro Molekül des Radikalbildners effektiv erzeugt werden.

9. Verfahren gemäß Anspruch 1 oder 7, wobei das Stoffmengenverhältnis von Sulfonyliodid zu Radikalbildner c) > 0,1 n ist, wobei n für die Zahl der Radikale steht, die pro Molekül des Radikalbildners effektiv erzeugt werden.

10. Verfahren gemäß irgendeinem der vorstehenden Ansprüche 1-9, wobei das iodatomhaltige Zwischenpolymer ein Molekulargewicht von weniger als 10000 hat.

11. Verfahren gemäß irgendeinem der vorstehenden Ansprüche 1-10, wobei das Endpolymer weiter umgesetzt wird, wobei das Iodatom im Endpolymer entfernt wird, vorzugsweise durch nucleophile Reaktion, durch Erhitzen und/oder durch Reaktion mit einem Radikalbildner, gegebenenfalls unter reduzierenden Bedingungen.

12. Block- oder Gradienten-(Co)polymer, erhältlich nach dem Verfahren gemäß irgendeinem der vorstehenden Ansprüche 1-11.

13. Verwendung eines gemäß irgendeinem der Ansprüche 1-11 hergestellten Block- oder Gradienten-End(co)polymers in einer Filmbildungszusammensetzung, vorzugsweise einer Beschichtungszusammensetzung, einer Kleber- oder Tintenzubereitung, besonders bevorzugt in Beschichtungszusammensetzungen für den Kraftfahrzeug- oder Industriebereich.

14. Verwendung eines gemäß irgendeinem der vorstehenden Ansprüche 1-11 hergestellten Block- oder Gradienten-End(co)polymers als Rheologie-Additiv, Tensid, Dispergiermittel, Haftvermittler und/oder Fließverbesserer.

## Revendications

1. Procédé de fabrication d'un (co)polymère final séquencé ou à gradient comprenant une étape de polymérisation radicalaire d'un mélange de monomères à insaturation éthylénique en un polymère intermédiaire contenant un atome d'iode, ledit polymère intermédiaire contenant un atome d'iode comprenant au moins 50 % en moles de monomères de méthacrylate, en présence de c) un précurseur de radicaux et d) I₂ ou un agent de transfert de chaîne d'iode, suivie d'une étape de polymérisation radicalaire d'un mélange de monomères à insaturation éthylénique en présence de a) un précurseur de radicaux et b) le polymère intermédiaire contenant un atome d'iode de la première étape.

2. Procédé de fabrication d'un (co)polymère final séquencé ou à gradient comprenant une étape de polymérisation radicalaire d'un mélange de monomères à insaturation éthylénique en présence de a) un précurseur de radicaux et b) un polymère intermédiaire contenant un atome d'iode ou un mélange de polymères intermédiaires contenant un atome d'iode, ledit polymère intermédiaire contenant un atome d'iode comprenant au moins 50 % en moles de monomères de méthacrylate et pouvant être obtenu par polymérisation de monomères à insaturation éthylénique.

3. Procédé selon la revendication 1 ou 2, dans lequel le rapport molaire polymère(s) intermédiaire(s) contenant un atome d'iode b) : précurseur de radicaux a) est > 0,1n, n représentant le nombre de radicaux effectivement générés par molécule de précurseur de radicaux.

4. Procédé selon l'une quelconque des revendications 1 à 3 précédentes, dans lequel la température pendant la ou les étapes de polymérisation est inférieure à 130 °C, de préférence inférieure à 110°C, de manière davantage préférée encore inférieure à 90 °C et de manière préférée entre toutes inférieure à 70 °C.

5. Procédé selon l'une quelconque des revendications 1 à 4 précédentes, dans lequel la ou les étapes de polymérisation est (sont) réalisée(s) en présence d'un composé contenant un époxyde.

6. Procédé selon la revendication 5, dans lequel le rapport molaire époxyde : polymère intermédiaire contenant un atome d'iode b) est > 0,01, de préférence > 0,05.

7. Procédé selon l'une quelconque des revendications 2 à 6, dans lequel le polymère intermédiaire contenant un atome d'iode peut être obtenu par polymérisation d'un mélange de monomères à insaturation éthylénique comprenant au moins 50 % en moles de monomères de méthacrylate en présence de c) un précurseur de radicaux et d) de l'iode ou un agent de transfert de chaîne d'iode.

8. Procédé selon la revendication 1 ou 7, dans lequel le rapport molaire I₂ : précurseur de radicaux c) est compris entre 0,05n et 0,5n, n représentant le nombre de radicaux effectivement générés par molécule de précurseur de radicaux.

9. Procédé selon la revendication 1 ou 7, dans lequel le rapport molaire iodure de sulfonyle : précurseur de radicaux c) est > 0,1n, n représentant le nombre de radicaux effectivement générés par molécule de précurseur de radicaux.

10. Procédé selon l'une quelconque des revendications 1 à 9 précédentes, dans lequel le polymère intermédiaire contenant un atome d'iode a un poids moléculaire inférieur à 10 000.

11. Procédé selon l'une quelconque des revendications 1 à 10 précédentes, dans lequel le polymère final est de nouveau mis en réaction, l'atome d'iode étant éliminé du polymère final, de préférence par réaction nucléophile, par chauffage et/ou par réaction avec un composé générateur de radicaux, éventuellement dans des conditions réductrices.

12. (Co)polymère séquencé ou à gradient pouvant être obtenu par le procédé selon l'une quelconque des revendications 1 à 11 précédentes.

13. Utilisation du (co)polymère final séquencé ou à gradient préparé selon l'une quelconque des revendications 1 à 11 dans une composition filmogène, de préférence une composition de revêtement, une formulation d'adhésif ou d'encre, de manière particulièrement préférée dans des compositions de revêtement automobiles ou industrielles.

14. Utilisation du (co)polymère final séquencé ou gradient préparé selon l'une quelconque des revendications 1 à 11 précédentes en tant qu'additif de rhéologie, tensioactif, dispersant, promoteur d'adhésion et/ou additif améliorant l'écoulement.
